# FASCICULE DE BREVET EUROPEEN

(11) **EP 0 469 999 B1**
(45) Date de publication et mention de la délivrance du brevet: **27.10.1993**
(21) Numéro de dépôt: 91402157.1
(22) Date de dépôt: 01.08.1991
(51) Int. Cl.: F16L 5/02, F16L 33/22

(54) **Procédé de raccordement étanche et raccord étanche correspondant**
Verfahren zur dichten Verbindung und entsprechende dichte Verbindung
Method of establishing a tight connection and corresponding tight connection

(30) Priorité: 03.08.1990 FR 9010091
(43) Date de publication de la demande: 05.02.1992
(73) Titulaire: Fondeur, François, F-59800 Lille (FR)
(72) Inventeur: Fondeur, François, F-59800 Lille (FR)
(74) Mandataire: Hénnion, Jean-Claude

(56) Documents cités:
- DE-C- 462 116
- FR-A- 1 520 832
- GB-A- 1 184 553

## Description

La présente invention concerne un procédé pour le raccordement étanche entre deux éléments dont l'un est dans un matériau rigide et comporte un orifice circulaire, notamment pour la fixation d'un tuyau dans la paroi d'un ballon de stockage ou la fixation d'un tuyau en caoutchouc sur une tubulure de distribution de fluide ou la fixation d'un réseau de tuyaux en caoutchouc sur un collecteur. Elle concerne également un dispositif de raccordement étanche, spécialement adapté pour la mise en oeuvre d'un tel procédé.

Pour fixer un tuyau, notamment en caoutchouc, par exemple dans la paroi d'un ballon de stockage d'un liquide , et obtenir un raccordement étanche, deux voies sont possibles. La première consiste à mettre en oeuvre un organe qui sera mécaniquement et rigidement fixé à la paroi par exemple par vissage et qui d'autre part servira d'embout de raccordement pour le tuyau. Cette première solution nécessite d'aménager la paroi de manière à ce que la fixation puisse s'opérer dans de bonnes conditions ; l'étanchéité n'est pas toujours parfaite.

La seconde voie consiste à utiliser le tuyau en matière élastique, et notamment en caoutchouc , comme élément d'étanchéité en combinaison avec une douille cylindrique creuse. Cette solution a déjà été décrite dans le document GB-A-1.184.553. Elle consiste à introduire la douille cylindrique à l'intérieur du tuyau en matière élastique , dont le diamètre extérieur est égal au diamètre de l'orifice circulaire. La douille a un diamètre tel que le tuyau est déformé. Ensuite , on passe le tuyau à travers l'orifice , en tirant dessus jusqu'à ce qu'il soit comprimé au droit de l'orifice circulaire , entre la paroi rigide et la douille. Cette seconde solution est très simple de mise en oeuvre ; cependant à l'usage il s'avère qu'elle présente certains inconvénients , dus en particulier aux variations de diamètre du tuyau d'une fabrication à l'autre ou aux irrégularités de diamètre de ce même tuyau au cours d'une même fabrication. En effet pour un orifice d'un diamètre déterminé le raccord se compose d'une douille cylindrique d'un diamètre extérieur déterminé et d'un tuyau d'un diamètre intérieur déterminé . Tout écart dans ces différents diamètres entraîne des dysfonctionnements dans la mise en place du raccord, pouvant conduire à une mauvaise étanchéité ou à une mauvaise fixation du raccord. Un autre inconvénient réside dans la nécessité de disposer d'un nombre important de jeux de douille, ou bien d'avoir à modifier le diamètre de l'orifice pour l'adapter au jeu de douille disponible.

Le but que s'est fixé le demandeur est de proposer un procédé de raccordement qui présente les mêmes avantages de simplicité que la seconde voie précitée mais qui pallie les inconvénients constatés.

Ce but est parfaitement atteint par le procédé de raccordement étanche, selon l'invention, entre un premier élément rigide présentant un orifice circulaire et un second élément.

Ce procédé est connu, notamment pour le document GB-A-1.184.553, en ce qu'il consiste à fixer dans l'orifice circulaire un tuyau en matière élastique , en le déformant à l'aide d'une douille.

De manière caractéristique selon l'invention, le tuyau a un diamètre extérieur légèrement supérieur à l'alésage de l'orifice , la douille est tronconique et a un angle de conicité (α) inférieur à l'angle de frottement entre les matériaux constitutifs respectivement de la douille et du tuyau , et le procédé consiste :
a. à introduire à l'intérieur du tuyau la douille de telle sorte que la tête de la douille tronconique soit à une certaine distance d'une extrémité donnée du tuyau ;
b. à introduire à force ladite extrémité du tuyau dans l'orifice;
c. et à faire coulisser la douille à l'intérieur du tuyau jusqu'à blocage total du tuyau entre la douille et la paroi de l'orifice.

Contrairement à ce qu'on aurait pu supposer la douille n'a pas tendance à sortir de l'orifice malgré la forme en tronc de cône. La fixation du raccord est définitive et un tel glissement n'est pas constaté pour autant que soit respectée la condition relative à l'angle de conicité. Ainsi la forme particulière de la douille permet de compenser les variations de diamètre du tuyau , et également d'utiliser une même douille pour des orifices d'alésages différents.

Selon une première variante du procédé , le second élément à raccorder peut consister dans le tuyau élastique lui-même.

Selon une seconde variante , le tuyau élastique a une longueur inférieure à celle de la douille et le second élément est raccordé à l'extrémité de la douille qui correspond à la base du cône. Dans ce dernier cas , le tuyau élastique sert uniquement de moyen d'étanchéité.

C'est un autre objet de l'invention que de proposer un dispositif de raccordement étanche entre un premier élément rigide présentant un orifice circulaire et un second élément, qui de manière connue, consiste en un tuyau en matière élastique et en une douille.

De manière caractéristique selon l'invention, le tuyau a un diamètre extérieur qui est légèrement supérieur à l'alésage de l'orifice du premier élément, et la douille est tronconique, a un angle de conicité (α) qui est inférieur à l'angle de frottement entre les matériaux constitutifs de la douille et du tuyau ; la base du cône de la douille est sensiblement égale au diamètre intérieur du tuyau.

La douille étant en polyamide et le tuyau en caoutchouc l'angle de conicité de la douille est au plus de 20°, de préférence entre 2° et 10°.

Avantageusement, de manière à faciliter l'appui sur la douille lors de son coulissement dans le tuyau, et aussi pour éviter une éventuelle altération de la face intérieure du tuyau, la douille comporte à sa base une collerette annulaire.

De préférence le tuyau a un diamètre extérieur qui est de 2 à 4% supérieur à l'alésage de l'orifice circulaire de l'élément à raccorder.

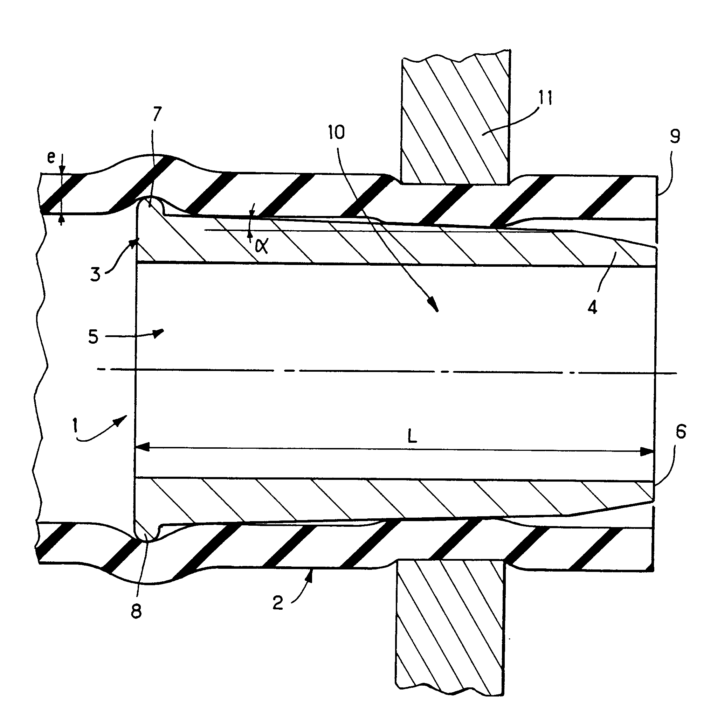

L'invention sera mieux comprise à la lecture qui va être faite du mode préféré de réalisation du dispositif de raccordement étanche à douille tronconique , appelé dans la suite du présent texte raccord, et de sa mise en oeuvre, illustré par le dessin annexé dans lequel la figure unique est une vue en coupe schématique du raccord placé dans une paroi.

Les différentes pièces du raccord étanche consistent dans une douille 1 tronconique et dans un tuyau 2 élastique.

La douille 1 est une pièce creuse qui a la forme extérieure d'un tronc de cône, avec un angle de conicité entre la partie 3 constituant la base du cône et la partie 4 constituant la tête de la douille 1.

L'évidement 5 intérieur de la douille a une forme cylindrique (figure) ou également tronconique.

La tête 4 de la douille est légèrement effilée et arrondie à son extrémité 6.

La base 3 de la douille comporte un prolongement annulaire constituant une collerette 7 dont le bord avant 8 est arrondi.

La douille 1 est par exemple en polyamide moulé.

Dans un exemple précis de réalisation, les dimensions de la douille étaient les suivantes : diamètre extérieur de la tête 4 13mm , diamètre extérieur de la base 14,5mm, longueur L 30mm - ce qui correspond à un angle α de 3° -, diamètre extérieur de la collerette 7 16,5mm.

Le tuyau 2 est en caoutchouc souple, d'une dureté shore A de l'ordre de 70 à 80.

Dans l'exemple précité, pour le raccordement sur un orifice circulaire dont l'alésage est de 18mm, le diamètre extérieur du tuyau 2 était de 18,5mm, soit sensiblement 3% supérieur à celui de l'alésage, et son épaisseur de 2mm.

La mise en oeuvre des deux pièces 1,2 constituant le raccord étanche selon l'invention est réalisée dans les conditions suivantes.

On introduit à l'intérieur du tuyau la douille 1 , la base 3 étant introduite d'abord ;et on repousse cette dernière de manière à ce que la tête 6 de la douille soit approximativement à un centimètre du bord avant 9 du tuyau 1.

Grâce à ce prépositionnement de la douille 1 à l'intérieur du tuyau 2, d'une part une certaine longueur de tuyau déborde l'emplacement de la douille et d'autre part la tête 4 de la douille est tournée vers l'extrémité libre du tuyau 2.

L'opération suivante consiste à introduire dans l'orifice 10 délimité par la paroi 11 ladite longueur de tuyau 2 débordant la douille 1.

Etant donné que le diamètre extérieur du tuyau est légèrement inférieur à celui de l'alésage de l'orifice 10, cette introduction est faite à force.

Puis on fait coulisser la douille 1 à l'intérieur du tuyau 2 de sorte que la tête 4 de la douille 1 pénètre dans l'orifice 10. Cette opération de coulissement est poursuivie jusqu'à coincement complet de la douille 1, c'est-à-dire jusqu'à ce que l'écrasement du tuyau 2 entre la paroi 11 de l'orifice et la face conique de la douille 1 s'oppose à l'avancement de la douille 1.

La présence de la collerette 7 augmente la surface d'appui permettant le coulissement de la douille 1. Son rebord 8 arrondi évite tout endommagement de la face intérieure du tuyau 2. La collerette 7 peut, à l'extrême, servir de butée de blocage.

Dans l'exemple illustré, le tuyau 2 est prolongé (vers la gauche de la figure) ; il s'agit par exemple de la fixation de ce tuyau 2 dans la paroi 11 d'un ballon de stockage d'un liquide.

On comprend que d'autres versions peuvent être présentées sans pour autant sortir du cadre de la présente invention. Le tuyau 2 peut être d'une longueur réduite et la douille peut au-delà de sa base 3 être prolongée par exemple par un coude , éventuellement équipé d'un système de clapet, ou bien le tuyau lui-même , peut avoir une extrémité, en forme de coude.

L'invention n'est pas limitée aux modes de réalisation qui ont été décrits ci-dessus à titre d'exemples non exhaustifs , mais en couvre toutes les variantes. En particulier il revient à l'homme du métier de déterminer , en fonction des matériaux constitutifs de la douille tronconique 1 et du tuyau , l'angle de conicité de la douille de telle sorte que cet angle soit toujours inférieur à l'angle de frottement, c'est-à-dire au coefficient de frottement exprimé sous forme angulaire, entre lesdits matériaux. C'est la condition impérative pour que ce raccord, une fois installé , se maintienne en place. Sauf pour le cas où la douille 1 serait dans un matériau particulièrement glissant tel que le téflon, l'angle de conicité sera généralement au plus de 20°.

## Revendications

1. Procédé de raccordement étanche entre un premier élément rigide (11) présentant un orifice circulaire (10) et un second élément, consistant à fixer dans l'orifice (10) un tuyau (2) en matière élastique, en le déformant à l'aide d'une douille (1), caractérisé en ce que, le tuyau (2) ayant un diamètre extérieur légèrement supérieur à l'alésage de l'orifice (10),et la douille (1) étant tronconique et ayant un angle de conicité (α) inférieur à l'angle de frottement entre les matériaux constitutifs respectivement de la douille (1) et du tuyau (2), il consiste :
a. à introduire à l'intérieur du tuyau (2) la douille (1) de telle sorte que la tête (4) de la douille (1) tronconique soit à une certaine distance d'une extrémité donnée (9) du tuyau (2);
b. à introduire à force ladite extrémité (9) du tuyau (2) dans l'orifice (10) ;
c. et à faire coulissser la douille (1) à l'intérieur du tuyau (2) jusqu'à blocage total du tuyau (2) entre la douille (1) et la paroi (11) de l'orifice (10).

2. Procédé selon la revendication 1 caractérisé en ce que le second élément à raccorder consiste dans le tuyau élastique lui-même.

3. Procédé selon la revendication 1 caractérisé en ce que le tuyau (1) élastique a une longueur inférieure à celle (L) de la douille (1) et le second élément est raccordé à l'extrémité de la douille qui correspond à la base (3) du cône.

4. Dispositif de raccordement étanche entre un premier élément rigide (11) présentant un orifice circulaire (10) et un second élément, consistant en un tuyau (2) en matière élastique et en une douille (1) caractérisé en ce que le tuyau (2) a un diamètre extérieur qui est légèrement supérieur à l'alésage de l'orifice (10), en ce que la douille (1) est tronconique, a un angle de conicité (α) qui est inférieur à l'angle de frottement entre les matériaux constitutifs de la douille (1) et du tuyau (2), et en ce que le diamètre à la base (3) du cône est sensiblement égal à diamètre intérieur du tuyau (2).

5. Dispositif de raccordement étanche selon la revendication 4 caractérisé en ce que la douille étant en polyamide et le tuyau en caoutchouc l'angle de conicité de la douille est au plus de 20°, de préférence entre 2° et 10°.

6. Dispositif de raccordement étanche selon l'une des revendications 4 ou 5 caractérisé en ce que la douille (1) comporte à sa base une collerette annulaire (7).

7. Dispositif de raccordement étanche selon les revendications 4 à 6 caractérisé en ce que le tuyau (2) a un diamètre extérieur qui est de 2 à 4% supérieur à l'alésage de l'orifice circulaire (10) de l'élément (11) à raccorder.

## Patentansprüche

1. Verfahren zur dichten Verbindung eines ersten, starren Elements (11), das eine kreisförmige Öffnung (10) aufweist, mit einem zweiten Element, das darin besteht, in der Öffnung (10) einen Schlauch (2) aus elastischem Material zu befestigen, indem man diesen mit Hilfe einer Hülse (1) verformt, dadurch gekennzeichnet, daß es in folgenden Schritten besteht, wobei der Schlauch (2) einen Außendurchmesser hat, der etwas größer ist als die Bohrung der Öffnung (10), und die Hülse (1) kegelstumpfförmig ist und einen Konizitätswinkel (α) aufweist, der geringer ist als der Reibungswinkel zwischen den Materialien, aus denen zum einen die Hülse (1) und zum anderen der Schlauch (2) bestehen:
a. Die Hülse (1) wird so in das Schlauchinnere (2) geführt, daß sich die Spitze (4) der kegelstumpfförmigen Hülse (1) in einer bestimmten Entfernung von einem gegebenen Ende (9) des Schlauchs (2) befindet.
b. Das genannte Ende (9) des Schlauchs (2) wird mit Druck in die Öffnung eingeführt.
c. Die Hülse (1) wird ins Innere des Schlauchs (2) geschoben, bis der Schlauch (2) völlig zwischen der Hülse (1) und der Wand (11) der Öffnung (10) blockiert ist.

2. Verfahren nach Anspruch 1, dadurch gekennzeichnet, daß das anzuschließende zweite Element in dem Schlauch selbst besteht.

3. Verfahren nach Anspruch 1, dadurch gekennzeichnet, daß die Länge des Schlauchs (1) geringer als die Länge (L) der Hülse (1) ist und daß das zweite Element an das Ende der Hülse angeschlossen wird, das dem Ansatz (3) des Konus entspricht.

4. Dichte Verbindungsvorrichtung für ein erstes, starres Element (11), das eine kreisförmige Öffnung (10) aufweist, und ein zweites Element, die in einem Schlauch (2) aus elastischem Material und einer Hülse (1) besteht, dadurch gekennzeichnet, daß der Schlauch (2) eine Außendurchmesser hat, der etwas größer ist als die Bohrung der Öffnung (10), und daß die Hülse (1) kegelstumpfförmig ist und einen Konizitätswinkel (α) aufweist, der geringer ist als der Reibungswinkel zwischen den Stoffen, aus denen jeweils die Hülse (1) und der Schlauch (2) bestehen, sowie darin, daß der Durchmesser am Ansatz (3) des Konus im wesentlichen gleich dem Innendurchmesser dces Schlauchs (2) ist.

5. Dichte Anschlußvorrichtung nach Anspruch 4, dadurch gekennzeichnet, daß, nachdem die Hülse aus Polyamid und der Schlauch aus Gummi bestehen, der Konizitätswinkel der Hülse höchstens 20°, vorzugsweise zwischen 2° und 10° beträgt.

6. Dichte Anschlußvorrichtung nach einem der Ansprüche 4 oder 5, dadurch gekennzeichnet, daß die Hülse (1) an ihrem Ansatz einen ringförmigen Flansch (7) aufweist.

7. Dichte Anschlußvorrichtung nach einem der Ansprüche 4 bis 6, dadurch gekennzeichnet, daß der Schlauch (2) einen Außendurchmesser hat, der 2 bis 4 % größer ist als die Bohrung der kreisförmigen Öffnung (10) des anzuschließenden Elements (11).

## Claims

1. Method of tight connection between a first rigid element (11) provided with a circular orifice (10) and a second element, consisting in fixing in the orifice (10) a pipe (2) in flexible material, by deforming it with the help of a bushing (1), characterized in that, the pipe (2) having an external diameter slightly greater than the bore of the orifice (10), and the bushing (1) being truncated cone-shaped and having an angle of conicity (alpha) which is smaller than the angle of friction between the materials constituting the bushing (1) and the pipe (2), respectively, it consists in:
a) introducing the bushing (1) inside the pipe (2), such that the head (4) of the truncated cone-shaped bushing (1) is at a certain distance from one given end (9) of the pipe (2)**;**
b) force-introducing said end (9) of the pipe (2) into the orifice (10); and
c) in causing the bushing (1) to slide inside the pipe (2) until the pipe (2) is completely blocked between the bushing (1) and the wall (11) of the orifice (10).

2. Method according to claim 1, characterized in that the second element to be connected consists in the actual flexible pipe.

3. Method according to claim 1, characterized in that the flexible pipe (1) has a length smaller than that (L) of the bushing (1) and the second element is connected to the end of the bushing which corresponds to the base (3) of the cone.

4. Tight connection fitting between a first rigid element having a circular orifice (10) and a second element consisting in a pipe (2) in flexible material and in a bushing (1), characterized in that the pipe (2) has an external diameter which is slightly greater than the bore of the orifice (10), in that the bushing (1) is truncated cone-shaped, has an angle of conicity (alpha) which is less than the angle of friction between the materials constituting the bushing (1) and the pipe (2), and in that the diameter at the base (3) of the cone is substantially equal to the internal diameter of the pipe (2).

5. Tight connection fitting according to claim 4, characterized in that the bushing being in polyamide and the pipe in rubber, the angle of conicity of the bushing is at the most 20°, and preferably between 2° and 10°.

6. Tight connection fitting according to one of claims 4 or 5, characterized in that the bushing (1) is provided at its base with an annular flange (7).

7. Tight connection fitting according to claims 4 to 6, characterized in that the pipe (2) has an external diameter which is 2 to 4% greater than the bore of the circular orifice (10) of the element (11) to be connected.
